# FASCICULE DE BREVET EUROPEEN

(11) **EP 0 499 561 B1**
(45) Date de publication et mention de la délivrance du brevet: **24.05.1995**
(21) Numéro de dépôt: 92470002.4
(22) Date de dépôt: 27.01.1992
(51) Int. Cl.: F16L 25/00, F16L 27/10

(54) **Manchon composite, procédé pour sa mise en oeuvre, et joint d'étanchéité en comportant application**
Mehrteilige Manschette, ihr Installationsverfahren und zugehöriges Dichtelement
A multi-piece collar, installation procedure and sealing element for same

(30) Priorité: 04.02.1991 FR 9101350
(43) Date de publication de la demande: 19.08.1992
(73) Titulaire: PONT-A-MOUSSON S.A., 54017 Nancy (FR)
(72) Inventeur: Barbe, Pierre, F-54200 Toul (FR); Mignet, Vincent, F-54700 Blenot lès Pont-à-Mousson (FR); Renard, Serge, F-54700 Pont-à-Mousson (FR)
(74) Mandataire: Puit, Thierry

(56) Documents cités:
- EP-A- 0 360 946
- DE-A- 2 153 064
- FR-A- 2 127 616
- GB-A- 2 186 651
- US-A- 3 877 733

## Description

L'invention est relative à un manchon composite, c'est-à-dire composé de pièces solidarisées entre elles, ce manchon composite étant destiné à la confection d'un joint d'étanchéité de canalisations de collecte et de branchement d'assainissement gravitaire.

Plus particulièrement, elle concerne un manchon pour l'assemblage étanche de bouts unis de tuyaux dont la surface extérieure est à l'état brut, non usiné, ces tuyaux étant en fibres-ciment, en fonte ou en tout autre matériaux adapté.

Le manchon composite et le joint d'étanchéité qui en comporte application sont destinés à assurer l'étanchéité pour des pressions pouvant aller jusqu'à 2 bars environ, et ceci, avec de larges tolérances diamétrales extérieures des bouts unis des tuyaux assemblés.

Le manchon et le joint permettent également des déviations angulaires d'un tuyau par rapport à l'autre.

Par le brevet FR 1 439 234, on connaît un manchon composite d'assemblage à déviation angulaire et à tolérances diamétrales de deux bouts unis de tuyaux. Dans ce manchon composite, une manchette à lèvres d'extrémités souples, minces, élastiques, est enfermée dans une virole rigide à extrémités rabattues à angle droit vers l'intérieur, c'est-à-dire vers l'axe. Un tel assemblage est étanche à la pression intérieure du fluide contenu dans la canalisation, qui tend à appliquer les lèvres minces sur les tuyaux, mais non à la pression extérieure d'un fluide qui est capable de soulever et d'écarter chaque lèvre du bout uni sur lequel elle est élastiquement appliquée.

Par le brevet FR 2 444 864, on connaît également un manchon composite de raccordement étanche de deux tuyaux de fibres-ciment, permettant de larges tolérances diamétrales extérieures des tuyaux ainsi que des déviations angulaires et assurant l'étanchéité aussi bien à la pression extérieure qu'à la pression intérieure. Le manchon composite est réalisé par soudage de deux garnitures d'étanchéité aux extrémités d'une pièce tubulaire rigide ou manchon de raccordement. Le soudage nécessite l'emploi de matériaux bien déterminés, en l'espèce une polyoléfine pour la pièce tubulaire ou manchon, et un caoutchouc EPDM pour les garnitures d'étanchéité en raison de leur aptitude au soudage. Quant aux garnitures d'étanchéité, elles sont du type à lèvre unique à bourrelet d'extrémité contenant à coeur un bracelet élastique de serrage sur les bouts unis de tuyaux.

Par le document EP-A-0 360 946 on connaît un manchon composite du type comportant une virole extérieure rigide et une manchette souple et élastique d'étanchéité logée à l'intérieur de ladite virole qui l'enveloppe et pourvue d'une saillie circulaire médiane destinée à jouer le rôle de butée entre les extrémités unies de tuyaux à raccorder.

La Demanderesse s'est posé le problème de solidariser les pièces composant le manchon composite sans soudure, donc en laissant une certaine latitude dans le choix des matériaux, et sans enfermer une manchette souple dans une virole rigide, afin de ne pas restreindre les tolérances diamétrales sur tuyaux ni les possibilités de débattement angulaire.

La présente invention a pour objet un manchon composite qui résout ce problème. Ce manchon composite comporte une virole extérieure rigide d'axe XX et une manchette souple et élastique d'étanchéité d'axe XX, réversible, logée à l'intérieur de ladite virole qui l'enveloppe et pourvue d'une saillie circulaire médiane destinée à jouer le rôle de butée entre les extrémités unies des tuyaux à raccorder, ladite manchette souple et élastique étant solidarisée avec la virole rigide par une paire de joncs toriques ou anneaux appliquant intérieurement ladite manchette contre ladite virole suivant des zones de contact proches des extrémités de cette dernière, tout en ménageant entre lesdites zones de contact un espace annulaire situé entre la manchette et la virole.

Un autre problème résolu par le manchon composite de l'invention est d'accroître les tolérances diamétrales sur les tuyaux à raccorder au-delà de ce que permet la souplesse de seules lèvres minces d'une garniture d'étanchéité.

Ce supplément de tolérances diamétrales est apporté par l'espace annulaire entre la manchette souple d'étanchéité et la virole rigide constituant le manchon composite de l'invention.

Un autre problème encore est de conférer à la manchette souple et élastique, qui doit assurer l'étanchéité du raccordement des tuyaux par le manchon composite, des aptitudes multiples telles que facilité de démoulage à l'état libre, emmanchement des tuyaux sans effort, ainsi qu'étanchéité, sans compliquer les formes de la manchette.

Cet autre problème est résolu par la conception du manchon composite et de sa manchette, et par un procédé de réalisation et de mise en oeuvre dudit manchon composite qui consiste en phases successives de retournement complet de la manchette libre et de rabattements de la manchette à l'intérieur de la virole. Par sa réversibilité, la manchette se prête à ces déformations.

Enfin, l'invention a pour objet un joint d'étanchéité réalisé au moyen du manchon composite et par le procédé précité.

D'autres caractéristiques et avantages apparaîtront au cours de la description qui va suivre.

Aux dessins annexés, donnés uniquement à titre d'exemple,
- la Fig. 1 est une vue partielle en coupe méridienne des différentes pièces, à l'état libre, composant un manchon composite conforme à l'invention, à savoir une virole rigide, une manchette souple, et une paire de joncs toriques ou d'anneaux,
- la Fig. 2 est une vue partielle en coupe de la manchette souple et élastique de la Fig. 1, complètement retournée en vue de son montage pour constituer le manchon composite,
- la Fig. 3 est une vue partielle en coupe du manchon composite de la Fig. 1 après assemblage des différentes pièces mais avant emmanchement des tuyaux à assembler,
- la Fig. 4 est une vue partielle en coupe du joint d'étanchéité de l'invention formé par l'assemblage de deux tuyaux alignés à l'intérieur du manchon composite de la Fig. 3, pour un diamètre maximal des tuyaux,
- la Fig. 5 est une vue analogue à la Fig. 4 du joint d'étanchéité réalisé pour des tuyaux ayant un diamètre minimal,
- la Fig. 6 est une vue partielle en coupe, correspondant aux Fig. 4 et 5, du joint d'étanchéité réalisé pour des tuyaux présentant une déviation angulaire,
- la Fig. 7 est une vue analogue à la Fig. 3 suivant un deuxième mode de réalisation de l'invention,
- la Fig. 8 est une vue partielle en coupe du joint d'étanchéité de l'invention formé par l'assemblage de deux tuyaux alignés à l'intérieur du manchon composite de la Fig. 7, ce joint étant soumis à une pression intérieure d'un fluide contenu dans la canalisation,
- la Fig. 9 est une vue analogue à la Fig. 8, le joint d'étanchéité étant soumis à une pression extérieure de fluide,
- la Fig. 10 est une vue analogue à la Fig. 3 suivant un troisième mode de réalisation de l'invention.

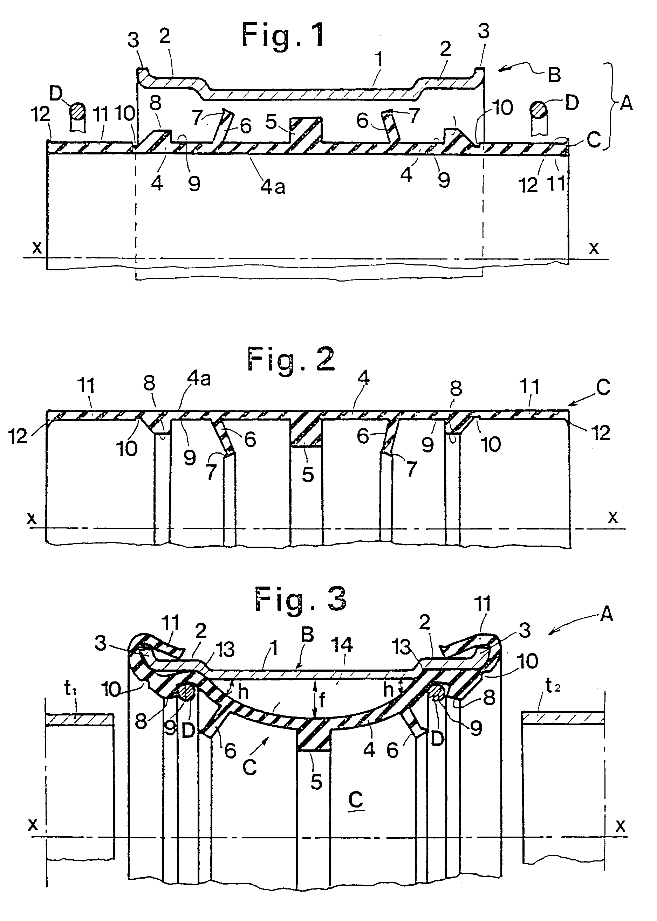

Suivant l'exemple d'exécution de la Fig. 1, le manchon composite A de l'invention se compose d'un élément tubulaire rigide, ou virole B, d'une manchette souple et élastique d'étanchéité C, et d'une paire d'anneaux ou joncs toriques de verrouillage D.

La virole B, d'axe XX, est en matière plastique rigide, par exemple en polyéthylène. Elle comporte un corps tubulaire 1 prolongé à ses extrémités par deux emboîtements 2 de diamètre intérieur supérieur à celui du corps tubulaire 1. Les emboîtements 2 s'évasent vers l'extérieur en collerettes ou embouchures 3.

Au lieu d'être en matière plastique, la virole B peut également être en matériau fibres-ciment ou bien en tôle d'acier, revêtue d'une couche anti-corrosion, d'une résine époxy, par exemple.

La manchette souple et élastique d'étanchéité C est en élastomère, par exemple en caoutchouc d'une dureté SHORE de l'ordre de 57 à 58 A. Elle est de faible épaisseur, par rapport à son diamètre, ce qui permet de la retourner ou retrousser, d'où son appellation ultérieure de manchette réversible. Sa longueur est sensiblement supérieure à celle de la virole B et correspond approximativement à la somme de la longueur de la virole B et de deux longueurs d'emboîtements 2.

La manchette C peut être moulée directement dans sa forme prêt à l'emploi telle que représentée à la Fig. 2 mais, pour des raisons de commodité et notamment de facilité de moulage, celle-ci se présentera préférentiellement, à l'état libre et la sortie du moule, sous la forme décrite ci-après par référence à la Fig. 1 :
Son corps tubulaire 4 d'axe XX, présente une surface cylindrique intérieure lisse 4a et une surface extérieure garnie d'un certain nombre de saillies ou protubérances externes.

En son milieu, le corps tubulaire 4 comporte une saillie radiale épaisse 5, de section méridienne carrée ou rectangulaire, destinée à former une butée pour les tuyaux à raccorder.

La manchette C, lorsqu'elle est solidarisée avec la virole B (Fig. 3), est pourvue intérieurement, symétriquement de part et d'autre de la butée médiane 5, d'une lèvre d'étanchéité annulaire tronconique 6 convergeant vers l'axe XX et vers la butée médiane 5, d'une saillie trapézoïdale 8 de section méridienne en forme de trapèze rectangle qui ménage, par son côté à angles droits et avec le corps tubulaire 4, une gorge 9 de logement d'un jonc torique ou anneau D, puis, au pied du côté oblique de la saillie trapézoïdale 8 et vers l'extrémité, d'une rainure circulaire 10, et enfin d'une longue lèvre annulaire, souple, d'étanchéité 11 qui se confond avec le corps tubulaire 4.

Les lèvres d'étanchéité 6 et 11 se terminent par des crêtes ou becs circulaires, respectivement 7 et 12, destinés à être appliqués sur les surfaces extérieures de tuyaux à raccorder.

Le procédé de réalisation et de mise en oeuvre du manchon composite A selon l'invention, tel que représenté aux figures 2 et 3, consiste à mouler une manchette souple et réversible C dont le corps tubulaire 4 présente une surface intérieure lisse 4a et des saillies ou protubérances extérieures de butée 5, d'étanchéité 6 et 11, et trapézoïdales 8, puis à retourner ou retrousser complètement ladite manchette C de façon que sa surface intérieure lisse 4a devienne extérieure et que les saillies ou protubérances 5, 6, 11 et 8 qui étaient externes à la sortie du moule non représenté (Fig. 1) deviennent internes, orientées vers l'axe XX de la manchette C (Fig. 2) ; la manchette souple C ainsi retournée est alors introduite coaxialement à l'intérieur de la virole rigide B (Fig. 3) puis, après alignement axial des tuyaux T1 et T2 à raccorder et avant leur emmanchement dans le manchon composite A, on rabat ou replie les extrémités des longues lèvres souples d'étanchéité 11 de la manchette C sur les collerettes 3 et emboîtements 2 de la virole B, vers l'extérieur, de manière à les coiffer et à mieux solidariser axialement la manchette C et la virole B, et de manière à former des entrées de manchon composite A évasées en trompette, facilitant ainsi l'emmanchement des tuyaux T1 et T2. Cette déformation et flexibilité des lèvres d'étanchéité 11 se trouve facilitée par la rainure circulaire 10 située entre chaque saillie trapézoïdale 8 et chaque longue lèvre d'extrémité 11, favorisant ainsi la flexibilité de ladite manchette C. Pour parfaire la solidarisation de la manchette C avec la virole B, chaque jonc torique ou anneau D, d'un diamètre extérieur correspondant au diamètre intérieur de chaque emboîtement 2, diminué du double de l'épaisseur du corps tubulaire 4, est alors introduit dans chaque gorge 9, entre chaque saillie trapézoïdale annulaire 8 et le corps tubulaire 4 de la manchette C, de manière à appliquer la manchette C contre les fonds d'emboîtements 2 de la virole B suivant des zones de contact 13.

Le corps tubulaire 4 prend alors en section méridienne une forme incurvée vers l'axe XX de la manchette C ou arquée à flèche radiale maximale f au droit de la butée médiane 5, et ménage ainsi avec la virole B un espace annulaire 14 qui est délimité par les zones de contact 13.

La courbure du corps tubulaire 4 contribue à maintenir avec serrage la solidarisation de la manchette C et de la virole B, en coopération avec les joncs ou anneaux D.

Il est à noter, à ce niveau, qu'il est possible également d'obtenir, après moulage, une manchette C dont le corps tubulaire 4 présente une incurvation prononcée par rapport à l'axe XX de ladite manchette.

Ainsi est réalisé le manchon composite A.

Il est à noter encore qu'au droit de chaque origine de lèvre tronconique 6, et dans l'espace annulaire 14, est constitué un espace radial de hauteur radiale h entre corps tubulaire 4 et virole B. Comme on le verra plus loin, cet espace radial ou annulaire est destiné à apporter un supplément de tolérance diamétrale sur les tuyaux, au-delà de la tolérance apportée par la seule souplesse des lèvres d'étanchéité 6 et 11.

En outre la forme incurvée ou arquée en section méridienne du corps tubulaire 4 est favorable à une application élastique ultérieure des lèvres d'étanchéité 6 sur les tuyaux raccordés.

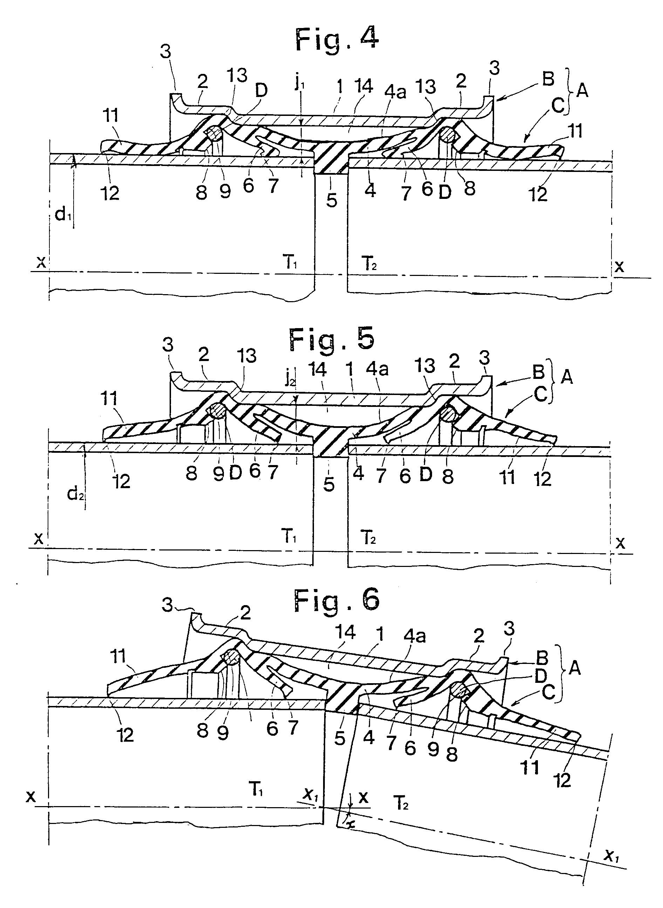

Pour raccorder des tuyaux (Fig. 3 et 4) dans le manchon composite A, prêt à l'emploi, c'est-à-dire au raccordement de deux tuyaux T1 et T2 par exemple en fibres-ciment, ou encore en fonte, à extrémités lisses et unies mais à l'état brut, non usinés, la manchette C est verrouillée axialement sur la virole B. Tout déplacement axial de la manchette C par rapport à la virole B lui est interdit, notamment lors de l'emmanchement des tuyaux T1 et T2 qui sont des éléments d'une conduite d'assainissement.

En vue d'un emmanchement ou d'une introduction sans effort des tuyaux T1 et T2 dans le manchon composite A, les lèvres longues d'étanchéité 11 repliées ou rabattues sur les collerettes 3 et emboîtements 2 offrent une entrée évasée en trompette, de diamètre intérieur minimal sensiblement supérieur au diamètre extérieur d1 ou d2 de chaque extrémité de tuyau.

Quant aux lèvres tronconiques 6 qui étaient convergentes l'une vers l'autre et vers la butée médiane 5 sur la manchette C à l'état libre (Fig. 2), elles deviennent divergentes et vont présenter à chaque tuyau T1 ou T2 une sorte de barrière qui sera franchie.

Les tuyaux T1 et T2 étant alignés suivant l'axe XX du manchon composite A, chaque extrémité de tuyau T1 et T2 est introduite axialement sans effort, franchissant librement le seuil de chaque saillie trapézoïdale 8 de diamètre intérieur minimal supérieur au diamètre extérieur d1 de tuyau T1 ou T2.

En poursuivant l'emmanchement des tuyaux T1 et T2, chaque tuyau T1 ou T2 atteint et repousse chaque lèvre tronconique 6, et la traverse en la rabattant vers la butée médiane 5, ce qui la rapproche du corps tubulaire 4. La crête 7 à l'extrémité de chaque lèvre 6 se trouve alors appliquée avec un certain serrage élastique et un certain écrasement sur la surface externe du tuyau T1 ou T2.

La butée 5 arrête la progression vers l'intérieur de chaque tuyau T1 ou T2. Le corps tubulaire 4 incurvé ou arqué s'est rapproché du corps tubulaire 1 de la virole B. L'espace annulaire variable 14 a diminué de volume. L'espace radial de hauteur h au droit de chaque origine de lèvre 6 s'est annulé du fait que chaque zone de contact 13 s'est élargie. La flèche maximale f du corps tubulaire 4 au droit de la butée médiane 5 a diminué également.

Pour terminer la confection du joint d'étanchéité suivant le procédé de l'invention, après emmanchement des tuyaux T1 et T2 jusqu'à ce qu'ils butent contre la butée médiane 5 (Fig. 4), chaque extrémité ou lèvre longue d'étanchéité 11 de la manchette C est rabattue à nouveau vers l'axe XX de manière à être séparée de la virole B et à être appliquée sur la surface externe lisse et unie de chaque tuyau T1, T2.

De même que la crête 7, la crête 12 de chaque lèvre longue 11, qui s'étend le long de chaque tuyau T1, T2, se trouve appliquée avec un certain serrage élastique sur la surface externe du tuyau T1, T2, et légèrement écrasée.

Les lèvres d'étanchéité tronconiques 6 convergent vers l'axe XX du manchon composite A et vers la butée médiane 5, cependant que les lèvres longues 11 s'étendent le long des extrémités de tuyaux T1 et T2 en convergeant vers l'axe XX et vers chaque extrémité du manchon composite A, de telle sorte que chaque lèvre d'étanchéité 6 et chaque lèvre longue d'étanchéité 11 forment entre elles et en section méridienne une sorte de V renversé à écartement variable au contact des tuyaux T1 et T2 suivant les tolérances diamétrales de ceux-ci.

Le joint d'étanchéité obtenu entre le manchon composite A précité et les extrémités lisses et unies des tuyaux T1 et T2, du type dans lequel les extrémités des tuyaux T1 et T2 raccordés butent contre la butée médiane 5 de la manchette souple C et dans lequel les lèvres d'étanchéité 6 et 11 sont appliquées sur les surfaces extérieures desdits tuyaux, est tel que la manchette souple C solidarisée avec la virole B pour composer le manchon composite A ménage avec la virole B un espace annulaire 14 à volume variable suivant les tolérances diamétrales des extrémités des tuyaux T1 et T2. Les joncs toriques ou anneaux D qui solidarisent la manchette souple C avec la virole rigide B sont emprisonnés dans les gorges 9 formées entre les saillies trapézoïdales 8 et le corps tubulaire 4 de la manchette C, et appliquent cette dernière contre les fonds des emboîtements 2 de la virole B en des zones de contact 13 qui limitent l'espace annulaire 14, le corps tubulaire 4 de la manchette C étant incurvé vers l'axe XX du manchon composite A entre ces zones de contact 13.

Dans ce joint d'étanchéité, les lèvres tronconiques 6 assurent l'étanchéité à la pression intérieure à la canalisation T1-T2. En effet, la pression intérieure du liquide transporté tend à appliquer plus fortement la lèvre 6 sur la surface extérieure du tuyau T1 ou T2. Les lèvres longues 11 assurent l'étanchéité à la pression extérieure de tout liquide, l'empêchant d'entrer dans l'espace compris entre le manchon A et chaque tuyau T1, T2, c'est-à-dire l'espace compris entre les lèvres 6 et 11 et chaque tuyau T1, T2. A fortiori tout liquide extérieur ne peut se mélanger avec le liquide intérieur véhiculé dans les tuyaux T1, T2. En effet, la pression extérieure tend à appliquer plus fortement la lèvre longue 11 sur la surface extérieure d'un tuyau T1, T2.

Ce manchon composite A de raccordement permet de larges tolérances sur les diamètres extérieurs des tuyaux raccordés.

Ainsi, suivant la Fig. 4, le joint d'étanchéité est réalisé avec des tuyaux T1, T2 de diamètre extérieur maximal d1. Au diamètre d1 correspond un jeu radial minimal j1 entre la surface extérieure d'un tuyau T1 ou T2 et la surface intérieure du corps tubulaire 1 de la virole B. Le volume de l'espace annulaire 14 est minimal.

D'autre part, suivant la Fig. 5, le joint d'étanchéité est réalisé avec des tuyaux T1, T2 de diamètre extérieur minimal d2. Au diamètre d2 correspond un jeu radial maximal j2 entre la surface extérieure d'un tuyau T1 ou T2 et la surface intérieure du corps tubulaire de la virole B. Le volume de l'espace annulaire 14 est maximal.

En comparant encore les Fig. 4 et 5, on voit que les lèvres d'étanchéité 6 et 11 sont moins "couchées" sur les tuyaux T1 et T2 à la Fig. 5 et que, sur cette dernière figure, le V renversé formé par les lèvres 6 et 11 tend à avoir un écartement plus faible qu'à la Fig. 4.

En comparant la Fig. 3 du manchon composite A avant réalisation du joint d'étanchéité avec les Fig. 4 et 5 du joint, on constate que la réduction à néant de l'espace radial de hauteur h entre corps 4 et corps 1 au droit de chaque lèvre 6 confère une tolérance diamétrale supplémentaire qui s'ajoute à celle qui est offerte par la souplesse des lèvres d'étanchéité 6 et 11. Il en résulte, au total, une tolérance diamétrale importante sur les tuyaux T1 et T2 tout en conservant l'étanchéité aux pressions intérieures et extérieures, qui dans ce joint sont de l'ordre de 2 bars.

Un autre avantage du manchon composite selon l'invention réside dans sa facilité d'adaptation aux déviations angulaires des tuyaux raccordés.

Ainsi, suivant l'exemple de la Fig. 6, le tuyau T2 présente un axe X1X1 dévié angulairement d'un angle x par rapport à l'axe XX du tuyau T1. Le manchon composite A s'adapte à cette déviation.

La butée 5 médiane sépare les tuyaux T1 et T2 en étant plus écrasée sur une partie de son pourtour que sur l'autre.

Les lèvres d'étanchéité 6 et 11 restent appliquées avec un certain serrage élastique sur les tuyaux T1 et T2.

La valeur maximale de l'angle x pour ce joint, de l'ordre de 10°, est limitée plus par le diamètre des tuyaux T1 et T2 dont les tranches d'extrémité peuvent se toucher que par le manchon composite A dont la manchette souple C est d'une grande déformabilité, et ménage un espace radial 14 important avec la virole B.

D'autres avantages découlant de ce mode de réalisation sont les suivants :
- grâce à la réversibilité de la manchette C, il est possible de la mouler dans la position de la Fig. 1, entre mandrin cylindrique ou noyau intérieur (surface 4a intérieure) et moule extérieur, et il est facile de la démouler en retirant d'abord le noyau cylindrique qui donne la surface 4a intérieure, puis en séparant ensuite la manchette C du moule extérieur. C'est dans la position retournée de la Fig. 2 que la manchette C est incorporée à la virole B pour former la manchon composite A.
- le manchon composite A est réalisé par des moyens simples et économiques grâce aux caractéristiques de ses composants B, C, D.
- l'espace annulaire 14 et la forme arquée en section méridienne de la manchette C accroissent les tolérance diamétrales déjà permises par la souplesse des lèvres d'étanchéité 6 et 11.
- la virole B rigide du manchon A suit aisément la déviation angulaire d'un angle x de l'un des tuyaux T1, T2 par rapport à l'autre, par solidarité avec la manchette C, grâce aux joncs toriques ou anneaux de verrouillage D, eux-mêmes fermement maintenus dans chaque gorge 9 entre chaque saillie trapézoïdale 8 et le corps tubulaire 4.
- enfin, le joint d'étanchéité est efficace tant à l'encontre d'une pression interne qu'à l'encontre d'une pression externe, grâce aux orientations des lèvres d'étanchéité 6 et 11 formant en section méridienne une sorte de V renversé appliqué sur les tuyaux T1 et T2 qui ont été emmanchés sans effort.

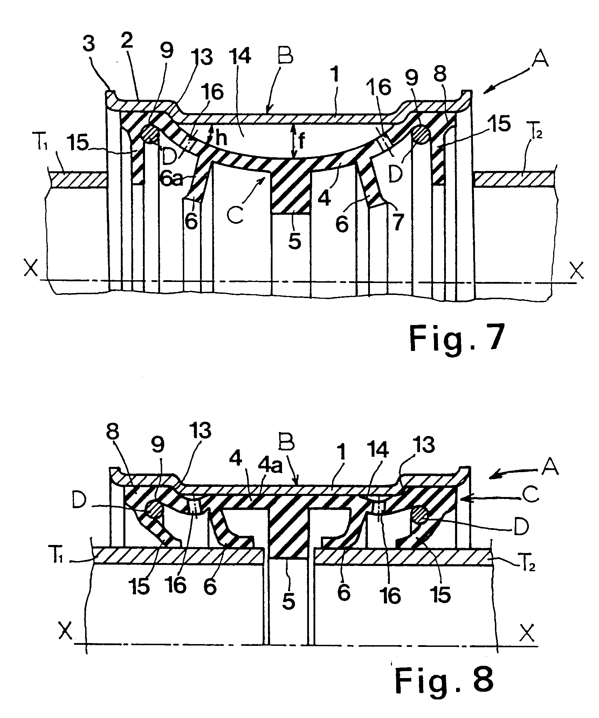

Pour faciliter la pose sur un chantier d'un tel manchon composite, il peut être avantageux, dans certains cas, de s'affranchir de l'opération de montage du joint d'étanchéité qui consiste, dans un premier temps, à replier les lèvres longues d'étanchéité 11 de la manchette C sur les collerettes 3 et emboîtements 2 de la virole B, puis dans un second temps, à rabattre lesdites lèvres longues 11 sur la surface externe lisse et unie des tuyaux T1 et T2 raccordés, et ce tout en conservant une étanchéité correcte tant à la pression intérieure d'un fluide circulant dans la canalisation T1-T2 qu'à la pression extérieure d'un fluide quelconque ; on peut alors faire appel à l'une ou l'autre des variantes des figures 7 à 9 et 10 où le manchon composite A représenté est muni d'un moyen de communication permettant aux fluides extérieurs de pénétrer dans l'espace annulaire 14, répondant parfaitement en cela, et comme il sera décrit par la suite, aux préoccupations posées.

Ce manchon composite A (Fig. 7 à 9 et Fig. 10) est tel que la manchette C, lorsqu'elle est solidarisée avec la virole B, est pourvue intérieurement, symétriquement de part et d'autre de la butée médiane 5, d'une lèvre d'étanchéité annulaire 6 convergeant vers l'axe XX et vers ladite butée médiane 5, et d'une saillie trapézoïdale 8 de section méridienne en forme de trapèze rectangle qui ménage, par son côté à angles droits et avec le corps tubulaire 4 de la manchette C, une gorge 9 de logement d'un jonc torique ou anneau D, ladite saillie trapézoïdale 8 se prolongeant, vers l'intérieur de la manchette, par une protubérance formant une lèvre annulaire souple radiale ou tronconique de protection 15. Lorsque le joint d'étanchéité entre un manchon composite A suivant l'une ou l'autre de ces deux variantes et les extrémités lisses et unies de tuyaux T1 et T2 est réalisé, les lèvres de protection 15 sont appliquées sur les surfaces extérieures des tuyaux T1 et T2 raccordés et convergent vers l'axe XX et vers la butée médiane 5 de la manchette C. Les lèvres de protection 15, situées aux extrémités de la manchette C, empêchent la pénétration de particules solides, telles que par exemple du matériau de remblai ou des grains de sable, à l'intérieur du manchon A, et sont étanches aux liquides extérieurs soumis à de faibles pressions, dont la valeur ne dépasse pas 0,3 bars environ, mais, par contre, ne sont plus étanches aux liquides extérieurs soumis à des pressions plus élevées. De plus, de par leur souplesse, ces lèvres 15 ne constituent nullement une entrave à l'emmanchement des tuyaux T1 et T2 à raccorder.

Concernant les matériaux constitutifs des divers éléments du manchon composite A selon l'une ou l'autre de ces deux variantes, ceux-ci sont de même nature que ceux utilisés pour confectionner le manchon composite de l'exemple d'exécution des Fig. 1 à 6.

De même, pour la mise en oeuvre du manchon composite selon ces deux variantes et pour la confection du joint d'étanchéité selon l'invention, on procède de manière analogue à ce qui a été décrit pour l'exemple d'exécution des Fig. 1 à 6, à l'exception toutefois des opérations relatives aux longues lèvres d'étanchéité 11 qui, dans le cas de ces deux variantes, ont été supprimées.

Dans le mode de réalisation des Fig. 7 à 9, la virole rigide B est identique à celle de la Fig. 1, et le moyen de communication dont est muni le manchon composite A est constitué par au moins un orifice 16 traversant le corps tubulaire 4 de la manchette C, ledit orifice 16 étant situé, entre une gorge 9 de la manchette C et la lèvre d'étanchéité annulaire tronconique 6 immédiatement à proximité de cette gorge 9. De manière préférentielle, ce moyen de communication est constitué, de part et d'autre de la butée médiane 5, par une série d'orifices 16 répartis sur le pourtour de la manchette C, lesdits orifices 16 étant situés, à proximité de chacune des extrémités du manchon, entre la gorge 9 et la lèvre annulaire tronconique d'étanchéité 6 de cette manchette C. Cet aménagement permet de s'affranchir de l'utilisation de longues lèvres annulaires d'étanchéité 11 telles que représentées aux Fig 1 à 6 pour assurer l'étanchéité à la pression extérieure d'un fluide, et offre l'avantage de regrouper les fonctions d'étanchéité à la pression intérieure et extérieure d'un fluide sur les seules lèvres d'étanchéité annulaires tronconiques 6.

En effet, dans le cas d'un joint d'étanchéité soumis à une pression intérieure à la canalisation T1-T2 (Fig. 8), le liquide transporté tend à appliquer plus fortement la lèvre d'étanchéité 6 sur la surface extérieure du tuyau T1-T2, et à repousser le corps tubulaire 4 de la manchette C vers la surface intérieure du corps tubulaire 1 de la virole B, et ce jusqu'à obtenir, dans le cas de pressions intérieures extrêmes, un contact entre la partie centrale de la surface cylindrique lisse 4a de la manchette C et la surface intérieure du corps tubulaire 1 de la virole B, le volume de l'espace annulaire 14 se trouvant alors diminué en conséquence.

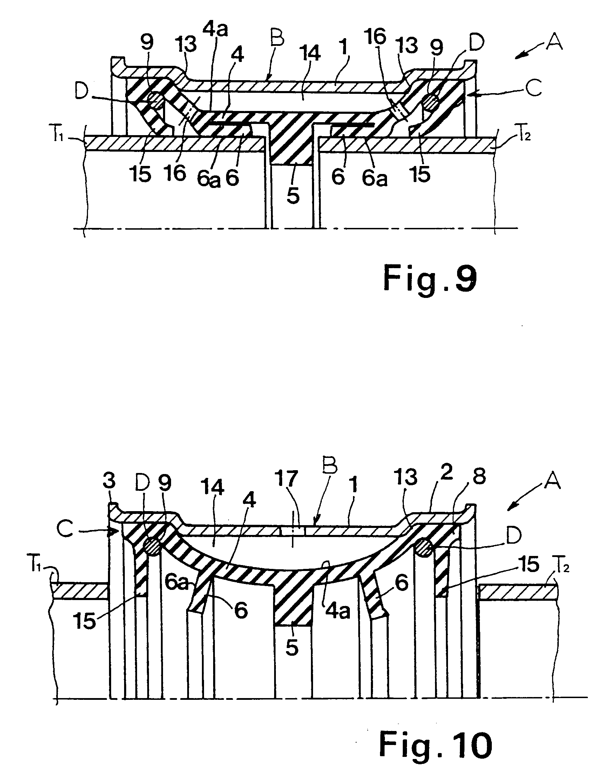

D'autre part, dans le cas d'un joint d'étanchéité soumis à la pression extérieure d'un liquide (Fig. 9) dont la valeur est telle que les lèvres de protection 15 ne sont plus étanches à ce liquide, ce dernier peut pénétrer librement dans l'espace compris entre les lèvres 6 et 15 et chaque tuyau T1, T2 puis, par l'intermédiaire des orifices 16 ménagés dans le corps tubulaire 4 de la manchette C, accéder à l'espace annulaire 14 et ce jusqu'à en remplir totalement le volume. Il se produit alors, à l'intérieur dudit espace annulaire 14, une force due à la pression de liquide qui a pour effet de repousser le corps tubulaire 4 vers l'intérieur du manchon A, amenant notamment ses parties voisines de la butée médiane 5 en contact avec la surface extérieure des tuyaux T1, T2 raccordés ; par la même occasion, le corps tubulaire 4 appuie sur les lèvres d'étanchéité 6 qui convergent vers l'axe XX et vers la butée médiane 5 et qui, de ce fait, se trouvent comprimées plus fortement encore sur la surface extérieure desdits tuyaux T1, T2, augmentant par conséquent le pouvoir d'étanchéité de ces lèvres 6 à la pression extérieure du liquide.

Ce processus est rendu possible par le fait que la surface lisse 4a du corps tubulaire 4 de la manchette C est largement supérieure à la surface 6a la plus extérieure au manchon des lèvres 6, privilégiant par conséquent la force d'application de la manchette C sur les tuyaux raccordés, et donc l'effet de compression des lèvres 6 sur ces tuyaux, cette force résultant de la présence du fluide sous pression contenu dans l'espace annulaire 14 et agissant sur ladite surface lisse 4a, et ce au détriment de la force induite par la pression du liquide contenu dans l'espace compris entre les lèvres 15 et 6 et les tuyaux T1, T2, qui s'exerce ainsi sur la surface 6a des lèvres 6, et qui aurait pour effet de décoller celles-ci de la surface extérieure des tuyaux T1, T2 raccordés.

Il est à noter, à ce sujet, que cet effet de compression des lèvres 6 sur les tuyaux raccordés, et qui empêche ainsi ces lèvres 6 de se désolidariser de la surface extérieure desdits tuyaux, est d'autant plus important que la force, et donc la pression extérieure, qui agit sur la surface lisse 4a de la manchette C est plus élevée.

Il est à noter également que le fonctionnement du manchon composite dans le cas d'une canalisation T1-T2 soumise à la pression extérieure élevée d'un fluide, tel qu'il vient d'être décrit précédemment, s'applique de manière analogue au cas de figure d'une canalisation T1-T2 dont le liquide transporté est soumis à une dépression ; dans ce cas, les orifices 16 permettent à l'espace annulaire 14 d'aspirer l'air et/ou les fluides circulant à l'extérieur de la canalisation.

Le manchon composite A de la variante illustrée à la Fig 10 ne diffère du manchon composite des Fig. 7 à 9 que par le fait que le moyen de communication utilisé n'est plus constitué par des orifices 16 débouchants ménagés dans le corps tubulaire 4 de la manchette C, mais est constitué par au moins un orifice 17 traversant le corps tubulaire 1 de la virole rigide B, ménageant ainsi un passage entre l'espace annulaire 14 et l'extérieur du manchon. De manière préférentielle, ce moyen de communication est constitué par une série d'orifices 17 répartis sur le pourtour de la virole rigide B dont ils traversent le corps tubulaire 1.

En ce qui concerne l'étanchéité à la pression intérieure et extérieure de fluides d'un joint d'étanchéité utilisant le manchon composite A selon cette variante (Fig. 10), le principe de fonctionnement est identique à celui décrit précédemment pour le mode de réalisation des Fig. 7 à 9.

En conséquence, les orifices 16 et 17 respectivement ménagés dans le corps de la manchette C et de la virole B, en combinaison avec l'espace annulaire 14 et la présence des lèvres d'étanchéité annulaires tronconiques 6, confèrent au manchon composite de l'une ou l'autre des deux variantes (Fig. 7 à 9 et Fig. 10) un fonctionnement en dynamique qui permet d'assurer une étanchéité parfaite aussi bien à la pression intérieure qu'à la pression extérieure de fluides agissant sur les tuyaux T1, T2 raccordés. Ces deux variantes permettent de surcroît d'atteindre des performances identiques au manchon composite correspondant au mode d'exécution des Fig. 1 à 6 et procurent les mêmes avantages que ce dernier, répondant en cela aux problèmes techniques que la présente invention s'est proposée de résoudre.

## Revendications

1. Manchon composite du type comportant une virole (B) extérieure rigide d'axe XX et une manchette souple et élastique (C) d'étanchéité d'axe XX, réversible, logée à l'intérieur de ladite virole (B) qui l'enveloppe et pourvue d'une saillie circulaire médiane (5) destinée à jouer le rôle de butée entre les extrémités unies de tuyaux (T1, T2) à raccorder, caractérisé en ce que la manchette souple et élastique (C) est solidarisée avec la virole rigide (B) par une paire de joncs toriques ou anneaux (D) appliquant intérieurement ladite manchette (C) contre ladite virole (B) suivant des zones de contact (13) proches des extrémités de cette dernière, tout en ménageant entre lesdites zones de contact (13) un espace annulaire (14) situé entre la manchette (C) et la virole (B).

2. Manchon composite suivant la revendication 1 caractérisé en ce que, le corps tubulaire (4) de la manchette (C) est incurvé vers l'axe (XX) de la manchette (C), ménageant ainsi avec la virole (B) un espace annulaire (14) qui est délimité par les zones de contact (13).

3. Manchon composite suivant la revendication 1 caractérisé en ce que la virole rigide (B) comporte un corps tubulaire (1) prolongé à ses extrémités par deux emboîtements (2) de diamètre intérieur supérieur à celui dudit corps tubulaire (1) lesdits emboîtements (2) s'évasant vers l'extérieur en collerettes ou embouchures (3).

4. Manchon composite suivant l'une quelconque des revendications 1 à 3 caractérisé en ce que la manchette (C), lorsqu'elle est solidarisée avec la virole (B), est pourvue intérieurement, symétriquement de part et d'autre de la butée médiane (5), d'une lèvre d'étanchéité annulaire tronconique (6) convergeant vers l'axe XX et vers ladite butée médiane (5), d'une saillie trapézoïdale (8) de section méridienne en forme de trapèze rectangle qui ménage, par son côté à angles droits et avec le corps tubulaire (4) de la manchette (C), une gorge (9) de logement d'un jonc torique ou anneau (D), et enfin d'une longue lèvre annulaire souple d'étanchéité (11) rabattable sur l'emboîtement (2) et la collerette (3) de la virole (B) et applicable sur la surface extérieure d'un tuyau (T1, T2) à emmancher.

5. Manchon composite suivant la revendication 4, caractérisé en ce que, entre chaque saillie trapézoïdale (8) et chaque longue lèvre d'extrémité (11) se situe une rainure circulaire (10) pour la flexibilité de la longue lèvre d'étanchéité (11).

6. Manchon composite suivant l'une quelconque des revendications 1 à 3 caractérisé en ce que ledit manchon (A) est muni d'un moyen de communication (16, 17) permettant aux fluides extérieurs de pénétrer dans l'espace annulaire (14).

7. Manchon composite suivant la revendication 6 caractérisé en ce que la manchette (C), lorsqu'elle est solidarisée avec la virole (B), est pourvue intérieurement, symétriquement de part et d'autre de la butée médiane (5), d'une lèvre d'étanchéité annulaire tronconique (6) convergeant vers l'axe XX et vers ladite butée médiane (5), et d'une saillie trapézoïdale (8) de section méridienne en forme de trapèze rectangle qui ménage, par son côté à angles droits et avec le corps tubulaire (4) de la manchette (C), une gorge (9) de logement d'un jonc torique ou anneau (D), ladite saillie trapézoïdale (8) se prolongeant, vers l'intérieur de la manchette, par une lèvre annulaire radiale ou tronconique de protection (15).

8. Manchon composite suivant l'une quelconque des revendications 6 et 7, caractérisé en ce que le moyen de communication est constitué par au moins un orifice (16) traversant le corps tubulaire (4) de la manchette (C), ledit orifice (16) étant situé entre la gorge (9) et la lèvre d'étanchéité annulaire tronconique (6) immédiatement à proximité de ladite gorge (9).

9. Manchon composite suivant la revendication 8, caractérisé en ce que le moyen de communication est constitué, de part et d'autre de la butée médiane (5), par une série d'orifices (16) répartis sur le pourtour de la manchette (C), lesdits orifices (16) étant situés, à proximité de chacune des extrémités du manchon, entre la gorge (9) et la lèvre annulaire tronconique d'étanchéité (6) de ladite manchette (C).

10. Manchon composite suivant l'une quelconque des revendications 6 à 7, caractérisé en ce que le moyen de communication est constitué par au moins un orifice (17) traversant le corps tubulaire (1) de la virole rigide (B), ménageant ainsi un passage entre l'espace annulaire (14) et l'extérieur du manchon.

11. Manchon composite suivant la revendication 10, caractérisé en ce que le moyen de communication est constitué par une série d'orifices (17) répartis sur le pourtour de la virole rigide (B) dont ils traversent le corps tubulaire (1).

12. Manchon composite suivant l'une quelconque des revendications 4 à 11, caractérisé en ce que les lèvres d'étanchéité (6, 11) se terminent respectivement par des crêtes ou becs circulaires (7, 12) destinés à être appliqués sur les surfaces extérieures des tuyaux (T1, T2) à raccorder.

13. Procédé de réalisation et de mise en oeuvre d'un manchon composite suivant l'une quelconque des revendications 1 à 5, caractérisé en ce que l'on moule une manchette souple et réversible (C) formée d'un corps tubulaire (4) ayant une surface intérieure lisse (4a) et des saillies ou protubérances extérieures de butée (5), d'étanchéité (6, 11), et trapézoïdales (8), puis on retourne ou retrousse complètement ladite manchette (C) de façon que sa surface intérieure lisse (4a) devienne extérieure et que ses saillies ou protubérances (5, 6, 11, 8) deviennent intérieures, orientées vers l'axe (XX) de la manchette (C), ladite manchette (C) ainsi retournée est alors introduite coaxialement à l'intérieur de la virole rigide (B), -puis, après alignement axial des tuyaux (T1, T2) à raccorder et avant leur emmanchement dans le manchon composite (A), on rabat ou replie les extrémités ou longues lèvres (11) de la manchette (C) sur les collerettes (3) et emboîtements (2) de la virole (B), vers l'extérieur, de manière à les coiffer et à mieux solidariser axialement la manchette (C) et la virole (B), et de manière à former des entrées de manchon composite (A) évasées en trompette pour faciliter l'emmanchement des tuyaux (T1, T2), on introduit chaque jonc torique ou anneau (D) dans chaque gorge (9) entre chaque saillie trapézoïdale annulaire (8) et le corps tubulaire (4) de la manchette (C), de manière à appliquer la manchette (C) contre les fonds d'emboîtements (2) de la virole (B) suivant des zones de contact (13),- enfin, après emmanchement des tuyaux (T1, T2) jusqu'à ce qu'ils butent contre la butée médiane (5), on rabat à nouveau les extrémités ou longues lèvres (11) de la manchette (C) vers l'axe (XX) de manière à les séparer de la virole (B) et à les appliquer sur la surface externe lisse et unie desdits tuyaux (T1, T2).

14. Joint d'étanchéité entre un manchon composite suivant l'une quelconque des revendications 1 à 12 et des extrémités lisses et unies de tuyaux (T1, T2), ce joint, du type dans lequel les extrémités des tuyaux (T1, T2) raccordés butent contre la butée médiane (5) de la manchette souple (C) et dans lequel les lèvres d'étanchéité (6, 11) et de protection (15) sont appliquées sur les surfaces extérieures desdits tuyaux (T1, T2), étant caractérisé en ce que la manchette souple (C) solidarisée avec la virole (B) pour composer le manchon composite (A) ménage avec la virole (B) un espace annulaire (14) à volume variable suivant les tolérances diamétrales des extrémités des tuyaux (T1, T2).

15. Joint d'étanchéité suivant la revendication 14, caractérisé en ce que, dans le manchon composite (A), la manchette souple (C) est solidarisée avec la virole rigide (B) par les joncs toriques ou anneaux (D) emprisonnés dans les gorges (9) formées entre les saillies trapézoïdales (8) et le corps tubulaire (4) de la manchette (C), lesdits joncs toriques ou anneaux (D) appliquant la manchette (C) contre les fonds des emboîtements (2) de la virole (B), en des zones de contact (13) qui limitent l'espace annulaire (14).

16. Joint d'étanchéité suivant l'une quelconque des revendications 14 et 15 caractérisé en ce que la manchette (C) présente un corps tubulaire (4) incurvé vers l'axe (XX) du manchon composite (A) entre les zones de contact (13).

## Claims

1. A composite sleeve of the type comprising a rigid outer ring (B) having an axis XX and a flexible elastic, invertible, sealing collar (C) having an axis XX housed within the said ring (B), which encloses it, and provided with a circular median projection (5) designed to act as a stop between the joined ends of the pipes (T1, T2) which are to be joined, characterised in that the flexible elastic collar (C) is made integral with the rigid ring (B) by a pair of toric rods or rings (D) pressing the said collar (C) internally against the said ring (B) in contact zones (13) near to the ends of the latter, while leaving an annular space (14) located between the collar (C) and the ring (B) between the said contact zones (13).

2. A composite sleeve according to claim 1, characterised in that the tubular body (4) of the collar (C) is curved inwards towards the axis (XX) of the collar (C), thus providing an annular space (14) with the ring (B) which is bounded by the contact areas (13).

3. A composite sleeve according to claim 1 characterised in that the rigid ring (B) incorporates a tubular body (1) which is extended at its ends by two extensions (2) of internal diameter greater than that of the said tubular body (1), the said extensions (2) flaring outwards to form flanges or mouthpieces (3).

4. A composite sleeve according to any one of claims 1 to 3, characterised in that the collar (C) when integral with the ring (B) is provided internally and symmetrically on either side of the median stop (5) with a tapered annular sealing ring (6) which converges towards the XX axis and towards the said median stop (5), a trapezoidal projection (8) having a median section in the shape of a rectangular trapezoid which forms, by means of a right angled side and in conjunction with a tubular body (4) of the collar (C), a recess (9) for receiving a toric rod or ring (D), and finally a long flexible annular sealing lip (11) which can be folded back over the extension (2) and the flange (3) of the ring (B), and which can be applied to the outer surface of a pipe (T1, T2) which has to be fitted in the sleeve.

5. A composite sleeve according to claim 4, characterised in that between each trapezoidal projection (8) and each long lip (11) there is a circular groove (10) for enhancing the flexibility of the long sealing lip (11).

6. A composite sleeve according to any one of claims 1 to 3, characterised in that the said sleeve (A) is provided with means of communication (16, 17) which allow external fluids to penetrate within the annular space (14).

7. A composite sleeve according to claim 6, characterised in that the collar (C) when integral with the ring (B) is provided internally and symmetrically on either side of the median stop (5) with a tapered annular sealing ring (6) which converges towards the XX axis and towards the said median stop (5), and a trapezoidal projection (8) having a median section in the shape of a rectangular trapezoid which forms, by means of a right-angled side and in conjunction with the tubular body (4) of the collar (C), a groove (9) for receiving a toric rod or ring (D), the said trapezoidal projection (8) being extended towards the interior of the sleeve by a radial annular or tapered protective lip (15).

8. A composite sleeve according to either of claims 6 and 7, characterised in that the means of communication comprises at least one orifice (16) passing through the tubular body (4) of the collar (C), the said orifice (16) being located between the groove (9) and the tapering annular sealing lip (6) in the immediate proximity of the said groove (9).

9. A composite sleeve according to claim 8, characterised in that the means of communication comprises on either side of the median stop (5) a series of orifices (16) located on the perimeter of the collar (C), the said orifices (16) being located close to each of the ends of the sleeve between the groove (9) and the tapering annular sealing lip (6) of the said collar (C).

10. A composite sleeve according to either of claims 6 to 7, characterised in that the means of communication comprises at least one orifice (17) passing through the tubular body (1) of the rigid ring (B), thus providing a passage between the annular space (14) and the outside of the sleeve.

11. A composite sleeve according to claim 10, characterised in that the means of communication comprises a series of orifices (17) distributed over the perimeter of the rigid ring (B), passing through the tubular body (1) thereof.

12. A composite ring according to any one of claims 4 to 11, characterised in that the sealing lips (6, 11) end in circular crests or tips (7, 12) respectively which are designed to press down against the outer surfaces of the pipes (T1, T2) being connected.

13. A method for constructing and using a composite sleeve according to any one of claims 1 to 5, characterised in that a flexible invertible collar (C) formed of a tubular body (4) which has a smooth internal surface (4a) and external sealing (6, 11) and trapezoidal (8) stop projections or protuberances (5), is moulded and then the said collar (C) is inverted or turned up completely in such a way that the smooth inner surface (4a) becomes the outer surface and the projections or protuberances (5, 6, 11, 8) become interior ones orientated towards the axis (XX) of the collar (C), the said collar (C) which is inverted in this way is then placed coaxially within the rigid ring (B), and then, after axial alignment of the pipes (T1, T2) undergoing connection and before they are placed in the composite sleeve (A), the ends of the long lips (11) of the collar (C) are inverted or folded back onto the flanges (3) and extensions (2) of the ring (B) outwards, so as to lie upon them and provide a better axial joint between the collar (C) and the ring (B), and so as to form outwardly flared openings into the composite sleeve (A) to assist insertion of the pipes (T1, T2), each toric rod or ring (D) being placed in each groove (9) between each tapering annular projection (8) and the tubular body (4) of the collar (C) so as to press the collar (C) against the ends of the projections (2) of the ring (B) in the contact areas (13), and then, after the pipes (T1, T2) have been pressed into the sleeve to the point where they abut against the median stop (5), the ends or long lips (11) of the collar (C) are again folded back towards the axis (XX) in such a way as to separate them from the ring (B) and to press them against the smooth joined outer surfaces of the said pipes (T1, T2).

14. A sealing joint between a composite sleeve according to any one of claims 1 to 12 and the smooth joined ends of the pipes (T1, T2), this joint, of the type in which the ends of the connected pipes (T1, T2) abut against the median stop (5) of the flexible collar (C) and in which the sealing (6, 11) and protective (15) lips are pressed against the outer surfaces of the said pipes (T1, T2), being characterised in that the flexible collar (C) which is integral with the ring (B) to form the composite sleeve (A) forms an annular space (14) of a variable volume according to the diametral tolerances of the ends of the pipes (T1, T2) with the ring (B).

15. A sealing joint according to claim 14, characterised in that in the composite sleeve (A) the flexible collar (C) is made integral with the rigid ring (B) by the toric rods or rings (D) housed in the grooves (9) formed between the trapezoidal projections (8) and the tubular body (4) of the collar (C), the said toric rods or rings (D) pressing the collar (C) against the ends of the extensions (2) of the ring (B) in contact areas (13) which bound the annular space (14).

16. A sealing joint according to either of claims 14 and 15 characterised in that the collar (C) has a tubular body (4) which curves towards the axis (XX) of the composite sleeve (A) between the contact zones (13).

## Patentansprüche

1. Mehrteilige Muffe, bestehend aus einem äußeren starren Ring (B) mit der Achse XX und einer biegsamen und elastischen Dichtungsmanschette (C) mit der Achse XX, die umgewendet werden kann, im Inneren des genannten, sie umschließenden Rohrs (B) sitzt und mit einem in der Mitte befindlichen, kreisförmigen Vorsprung (5) versehen ist, der dazu bestimmt ist, die Funktion eines Anschlags zwischen den zu verbindenden, aneinandergefügten Enden von Leitungsrohren (T1, T2) zu erfüllen,
dadurch gekennzeichnet, daß die biegsame und elastische Manschette (C) mit dem starren Rohr (B) durch ein Paar torische Verbindungselemente oder Ringe (D) verbunden ist, die die genannte Manschette (C) innen an das genannte Rohr (B) drücken, und zwar in Kontaktbereichen (13), die nahe bei den Enden des letzteren liegen, wobei sie jedoch zwischen den genannten Kontaktbereichen (13) einen ringförmigen Zwischenraum (14) zwischen der Manschette (C) und dem Rohr (B) freilassen.

2. Mehrteilige Muffe nach Anspruch 1,
dadurch gekennzeichnet, daß der röhrenförmige Körper (4) der Manschette (C) zur Achse (XX) der Manschette (C) hin gebogen ist, wobei er auf diese Weise mit dem Rohr (B) einen ringförmigen Zwischenraum (14) bildet, der von den Kontaktbereichen (13) begrenzt wird.

3. Mehrteilige Muffe nach Anspruch 1,
dadurch gekennzeichnet, daß das Rohr (B) einen röhrenförmigen Körper (1) besitzt, der an seinen Enden von zwei Steckabschnitten (2) mit einem größeren Innendurchmesser als dem des genannten röhrenförmigen Körpers (1) fortgesetzt wird, wobei die genannten Steckabschnitte (2) sich nach außen in Bünde oder Mündungen (3) erweitern.

4. Mehrteilige Muffe nach einem der Ansprüche 1 bis 3,
dadurch gekennzeichnet, daß die Manschette (C), wenn sie mit dem Rohr (B) verbunden ist, innen und symmetrisch zu beiden Seiten des mittleren Anschlags (5) mit einer kegelstumpfförmigen, ringförmigen Dichtungslippe (6), die mit der Achse (XX) und dem mittleren Anschlag (5) konvergiert, mit einem trapezförmigen Vorsprung (8) mit einem Meridianquerschnitt in der Form eines rechtwinkligen Trapezes, der mit seiner Seite mit den rechten Winkeln und mit dem röhrenförmigen Körper (4) der Manschette (C) eine Auskehlung (9) zur Aufnahme eines torischen Verbindungselements oder Rings (D) bildet, und schließlich mit einer langen, biegsamen, ringförmigen Dichtungslippe (11), die auf den Steckabschnitt (2) und den Bund (3) des Rohrs (B) umgeschlagen und auf die Außenfläche eines einzusteckenden Leitungsrohrs (T1, T2) gedrückt werden kann, versehen ist.

5. Mehrteilige Muffe nach Anspruch 4,
dadurch gekennzeichnet, daß für die Biegsamkeit der langen Dichtungslippe (11) zwischen jedem trapezförmigen Vorsprung (8) und jeder langen Endlippe (11) eine kreisförmige Rille (10) angeordnet ist.

6. Mehrteilige Muffe nach einem der Ansprüche 1 bis 3,
dadurch gekennzeichnet, daß die genannte Muffe (A) mit einem Verbindungsmittel (16, 17) versehen ist, durch das die außen befindlichen Flüssigkeiten in den ringförmigen Zwischenraum (14) eindringen können.

7. Mehrteilige Muffe nach Anspruch 6,
dadurch gekennzeichnet, daß die Manschette (C), wenn sie mit dem Rohr (B) verbunden ist, innen und symmetrisch zu beiden Seiten des mittleren Anschlags (5) mit einer kegelstumpfförmigen, ringförmigen Dichtungslippe (6) versehen ist, die mit der Achse (XX) und dem genannten mittleren Anschlag (5) konvergiert, sowie mit einem trapezförmigen Vorsprung (8) mit einem Meridianquerschnitt in der Form eines rechtwinkligen Trapezes versehen ist, der mit seiner Seite mit den rechten Winkeln und mit dem röhrenförmigen Körper (4) der Manschette (C) eine Auskehlung (9) zur Aufnahme eines torischen Verbindungselements oder Rings (D) bildet, wobei der genannte trapezförmige Vorsprung (8) zum Inneren der Manschette hin von einer radialen oder kegelstumpfförmigen, ringförmigen Schutzlippe (15) fortgesetzt wird.

8. Mehrteilige Muffe nach einem der Ansprüche 6 und 7,
dadurch gekennzeichnet, daß das Verbindungsmittel aus mindestens einer Öffnung (16) besteht, die durch den röhrenförmigen Körper (4) der Manschette (C) verläuft, wobei die genannte Öffnung (16) sich zwischen der Auskehlung (9) und der kegelstumpfförmigen, ringförmigen Dichtungslippe (6) in unmittelbarer Nähe der genannten Auskehlung (9) befindet.

9. Mehrteilige Muffe nach Anspruch 8,
dadurch gekennzeichnet, daß das Verbindungsmittel beiderseits des mittleren Anschlags (5) aus einer Reihe von über den Außenumfang der Manschette (C) verteilten Öffnungen (16) gebildet wird, wobei sich die genannten Öffnungen (16) in der Nähe von jedem der Enden der Muffe zwischen der Auskehlung (9) und der kegelstumpfförmigen, ringförmigen Dichtungslippe (6) der genannten Manschette (C) befinden.

10. Mehrteilige Muffe nach einem der Ansprüche 6 bis 7,
dadurch gekennzeichnet, daß das Verbindungsmittel aus mindestens einer Öffnung (17) besteht, die durch den röhrenförmigen Körper (1) des starren Rohrs (B) hindurch verläuft, wobei sie einen Durchlaß zwischen dem ringförmigen Zwischenraum (14) und dem Raum außerhalb der Muffe bildet.

11. Mehrteilige Muffe nach Anspruch 10,
dadurch gekennzeichnet, daß das Verbindungsmittel aus einer Reihe von Öffnungen (17) besteht, die über den Außenumfang des starren Rohrs (B) verteilt sind, durch dessen röhrenförmigen Körper (1) sie verlaufen.

12. Mehrteilige Muffe nach einem der Ansprüche 4 bis 11,
dadurch gekennzeichnet, daß die Dichtungslippen (6, 11) in kreisförmigen Kanten oder Rändern (7 bzw. 12) enden, die dazu bestimmt sind, an die Außenflächen der zu verbindenden Leitungsrohre (T1, T2) gedrückt zu werden.

13. Verfahren zur Ausführung und zum Einsatz einer mehrteiligen Muffe nach einem der Ansprüche 1 bis 5,
dadurch gekennzeichnet, daß eine biegsame und wendbare Manschette (C) geformt wird, die aus einem röhrenförmigen Körper (4) mit einer glatten Innenfläche (4a) und äußeren Vorsprüngen oder Auskragungen als Anschlag (5), als Dichtung (6, 11) und in Trapezform (8) besteht, und dann die genannte Manschette (C) komplett umgewendet oder umgestülpt wird, so daß ihre glatte Innenfläche (4a) zur Außenfläche wird und die Vorsprünge oder Auskragungen (5, 6, 11, 8) sich nun innen befinden und zur Achse (XX) der Manschette (C) hin gerichtet sind; die genannte, dergestalt umgedrehte Manschette (C) nun koaxial in das starre Rohr (B) eingeführt wird, und nach axialem Ausrichten der zu verbindenden Leitungsrohre (T1, T2) und nach deren Einstecken in die mehrteilige Muffe (A) die Enden der langen Lippen (11) der Manschette (C) über die Bünde (3) und Steckabschnitte (2) des Rohrs (B) nach außen dergestalt umgeschlagen oder umgeklappt werden, daß diese überdeckt werden und daß die Manschette (C) und das Rohr (B) axial fester miteinander verbunden sind, und um die Eingänge der mehrteiligen Muffe (A) für ein vereinfachtes Einstecken der Leitungsrohre (T1, T2) trompetenförmig erweitert zu formen, jedes torische Verbindungselement oder Ring (D) in jede Auskehlung (9) zwischen jedem trapezförmigen Vorsprung (8) und dem röhrenförmigen Körper (4) der Manschette (C) eingesetzt wird, so daß die Manschette (C) an Kontaktbereichen (13) gegen die Böden der Steckabschnitte (2) des Rohrs (B) gedrückt wird, - und schließlich nach dem Einstecken der Leitungsrohre (T1, T2), bis diese an dem mittleren Anschlag (5) anstoßen, die Enden oder langen Lippen (11) der Manschette (C) wieder zur Achse (XX) hin umgeschlagen werden, so daß sie von dem Rohr (B) getrennt und an die glatte und gleichmäßige Außenfläche der genannten Leitungsrohre (T1, T2) gedrückt werden.

14. Dichtung zwischen einer mehrteilige Muffe nach einem der Ansprüche 1 bis 12 und den glatten und gleichmäßigen Enden von Leitungsrohren (T1, T2), bei der die Enden der miteinander verbundenen Leitungsrohre (T1, T2) sich in Anlage an dem mittleren Anschlag (5) der biegsamen Manschette (C) befinden und bei der die Dichtungslippen (6, 11) und die Schutzlippe (15) gegen die Außenflächen der genannten Leitungsrohre (T1, T2) gedrückt sind,
dadurch gekennzeichnet, daß die biegsame Manschette (C), die mit dem Rohr (B) fest verbunden ist, um die mehrteilige Muffe (A) zu bilden, mit dem Rohr (B) einen ringförmigen Zwischenraum (14) mit je nach den Durchmessertoleranzen der Enden der Leitungsrohre (T1, T2) variierbarem Volumen bildet.

15. Dichtung nach Anspruch 14,
dadurch gekennzeichnet, daß in der mehrteiligen Muffe (A) die biegsame Manschette (C) mit dem starren Rohr (B) durch die torischen Verbindungselemente oder Ringe (D) verbunden ist, die in den Auskehlungen (9) eingeschlossen sind, die zwischen den trapezförmigen Vorsprüngen (8) und dem röhrenförmigen Körper (4) der Manschette (C) gebildet sind, wobei die genannten torischen Verbindungselemente oder Ringe (D) die Manschette (C) in Kontaktbereichen (13), die den ringförmigen Zwischenraum (14) umgrenzen, gegen die Böden der Steckabschnitte (2) des Rohrs (B) drücken.

16. Dichtung nach einem der Ansprüche 14 und 15,
dadurch gekennzeichnet, daß die Manschette (C) einen röhrenförmigen Körper (4) aufweist, der zwischen den Kontaktbereichen (13) zur Achse (XX) der mehrteiligen Muffe (A) hin gebogen ist.
